Europäisches Patentamt

European Patent Office

Office européen des brevets

(11) Veröffentlichungsnummer: **0 251 052**
**B1**

(12) **EUROPÄISCHE PATENTSCHRIFT**

(45) Veröffentlichungstag der Patentschrift:
06.06.90

(51) Int. Cl.⁵: **A01C 7/10, A01C 19/04**

(21) Anmeldenummer: 87108767.2

(22) Anmeldetag: 19.06.87

(54) Landwirtschaftliche Verteilmaschine, insbesondere Sämaschine oder Düngerstreuer.

(30) Priorität: 26.06.86 DE 3621388

(43) Veröffentlichungstag der Anmeldung:
07.01.88 Patentblatt 88/1

(45) Bekanntmachung des Hinweises auf die Patenterteilung:
06.06.90 Patentblatt 90/23

(84) Benannte Vertragsstaaten:
AT DE FR GB NL

(56) Entgegenhaltungen:
DE-A- 3 414 177
GB-A- 2 105 162
US-A- 4 343 414

(73) Patentinhaber: Amazonen-Werke H. Dreyer GmbH & Co. KG, Am Amazonenwerk 9-13,
D-4507 Hasbergen-Gaste(DE)

(72) Erfinder: Mix, Arthur, Gerhardt Hauptmannweg 15,
D-2872 Hude I.O.(DE)
Erfinder: Harrsen, Jan, Breslauerstrasse 3,
D-2086 Ellerau(DE)

ACTORUM AG

**Beschreibung**

Die Erfindung betrifft eine landwirtschaftliche Verteilmaschine, insbesondere Sämaschine oder Düngerstreuer gemäß den Oberbegriffen der Patentansprüche 1 oder 2.

Eine derartige landwirtschaftliche Verteilmaschine ist durch die deutsche Offenlegungsschrift 34 14 177 bekannt geworden. Bei dieser Verteilmaschine wird der als Regelgetriebe ausgebildete regelbare Antrieb von einem auf dem Boden abrollenden Laufrad angetrieben. Des weiteren ist eine Wegstreckenmeßeinrichtung vorgesehen, die unabhängig von dem Bodenrad den von der Verteilmaschine zurückgelegten Weg praktisch schlupffrei bzw. mit einem äußerst geringen Schlupfwert, der keinen Schwankungen wie das auf dem Boden abrollende Antriebsrad für das Regelgetriebe unterliegt. Des weiteren ist ein Sensor vorgesehen, der die ausgebrachte Menge bzw. die ausgebrachte Anzahl Körner des auszubringenden Saatgutes oder Düngers ermittelt. In Abhängigkeit der von der Wegstreckenmeßeinrichtung ermittelten Wegstreckenwerte wird die Ausbringmenge derart geregelt, daß pro Flächeneinheit bzw. pro zurückgelegter Wegstrecke immer die gewünschte Ausbringmenge ausgebracht wird.

Von Nachteil ist bei dieser bekannten Verteilmaschine jedoch, daß die Regelung des regelbaren Antriebes viel zu langsam reagiert, wenn an dem Antriebsrad Schlupf auftritt. Es vergeht zu viel Zeit, bis aufgrund der von dem Sensor erfaßten Werte die Regelung derart nachgestellt wird, daß aufgrund des an dem Rad auftretenden Schlupfes der eine andere Getriebeeingangsdrehzahl bewirkt, nachgeregelt werden kann.

Der Erfindung liegt nun die Aufgabe zugrunde, bei landwirtschaftlichen Verteilmaschine, wie Sämaschinen und Düngerstreuern, bei denen die Dosierorgane von einem auf dem Boden abrollenden Rad oder Walze etc. in einstellbarer Weise angetrieben werden, dahingehend zu verbessern, daß trotz des sich ständig ändernden Schlupfes an dem die Dosierorgane antreibenden Rad die eingestellte Ausbringmenge oder Anzahl des auszubringenden Saatgutes oder Düngers ohne Auswirkung des Schlupfes ausgebracht wird.

Diese Aufgabe wird erfindungsgemäß durch die Kennzeichen der Ansprüche 1 oder 2 gelöst.

Infolge dieser Maßnahmen wird bei auftretenden Schlupfänderungen an dem auf dem Boden abrollenden Antriebsrad oder Walze sofort die Einstellung der Dosierorgane oder der regelbare Antrieb in der Weise nachgestellt, daß die Änderung der Antriebsdrehzahl des Rades aufgrund des auftretenden Schlupfes sofort entsprechend der Schlupfänderung korrigiert wird, damit die gewünschte Menge Saatgut oder Dünger ausgebracht wird. Durch diese erfindungsgemäßen Maßnahmen werden also Schlupfänderungen die an dem Antriebsrad für die Dosierorgane oder für den regelbaren Antrieb auftreten durch sofortiges Nachregeln der Getriebeeinstellung, wenn Schlupfänderungen d.h. eine Änderung der Differenz zwischen den beiden Wegstreckenwerten auftreten, eleminiert, so daß also in jedem Falle unter Ausschaltung der durch die Schlupfänderung auftretenden Änderungen wie Änderung der Eingangsdrehzahl des Getriebes durch die entsprechend sofortige Nachregelung der Einstellung der Dosierorgane (wie beispielsweise die Getriebeeinstellung) entsprechend der Schlupfänderung die Ausbringmenge bzw. die ausgebrachte Anzahl von Körnern des auszubringenden Saatgutes oder Dünger unverändert bleibt.

Einen Einfluß auf die Körnerdichte, d.h. Körner pro Wegstrecke hat die Getriebeeinstellung, die Antriebsdrehzahl des Getriebes sowie die Fahrgeschwindigkeit. Eine z.B. durch Schlupf verringerte Antriebsdrehzahl der Dosierorgane bewirkt eine verringerte Dosierwellendrehzahl und somit eine kleinere Korndichte. Dieser Einfluß wird bei der Verteilmaschine nach der DE-OS 34 14 177 über die Erfassung der Körnerdichte über den Körnersensor erkannt und ausgeregelt. Doch sind die Störungen bei der bekannten Maschine nur von für die notwendigen Zeitkonstanten im Körnerregelkreis, von kurzer Dauer, so daß eine Reaktion erst nach einer Störung recht lang auf sich warten läßt. Hier wird durch die erfindungsgemäße Maßnahme Abhilfe geschaffen, denn besser und schneller läßt sich der störende Einfluß aus dem sich ändernden Schlupf an dem Antriebsrad durch einen unterlagerten Regelkreis für die Säwellendrehzahl in erfindungsgemäßer Weise erreichen. Mit einem gesonderten Regelkreis wird somit nur der Einfluß der Änderungen aufgrund des Schlupfes an dem Antriebsrad bzw. dem auf dem Boden abrollenden Antriebsorgan ausgeregelt. Die Dosierwelle erhält somit einen Impulsgeber mit einer nicht zur niedrigen Impulszahl pro Umdrehung, weil die Dosierwelle sich langsam dreht. Eine höhere Impulszahl ist aber für Schnelligkeit und Genauigkeit erforderlich. Vom Dosierwellenregler wird die Säwellendrehzahl konstant auf dem Vorgabewert des Körnerreglers gehalten. Durch die erfindungsgemäßen Maßnahmen wird schnell auf Veränderungen reagiert, so daß möglichst der Körnerregler nichts von einer Störung aus dem Antrieb erfäht. Das wesentliche, was durch die erfindungsgemäße Maßnahme erreicht ist, daß die Drehzahl der Dosierorgane proportional zur echten Geschwindigkeit ist, auch wenn die Dosierorgane von einem schlupfabhängigen Antriebsorgan angetrieben wird.

Diese schlupfabhängige Regelung läßt sich selbstverständlich entsprechend des Anspruches 2 auch bei Verteilmaschinen einsetzen, die mit einer Einrichtung zur Erfassung eines der tatsächlichen Ausbringmenge entsprechenden Wertes ausgerüstet sind. Bisher wurde der an dem Bodenrad bzw. Walze, welche die Dosierorgane oder den regelbaren Antrieb antreiben, auftretende Schlupf indirekt über die Erfassung der Ausbringmenge bzw. der Anzahl der Körner des auszubringenden Saatgutes oder Düngers erfaßt, jedoch mit einer erheblichen zeitlichen Verzögerung, da diese Einrichtung zunächst ja die erfaßten Werte auswerten, errechnen und Mittelwerte bilden mußte, bis ein neuer verläßlicher tatsächlicher Wert der Ausbringmenge bzw. der Anzahl der ausgebrachten Körner vorliegt, so daß erst mit einer erheblichen zeitlichen Verzögerung der regelbare Antrieb nachgeregelt werden konnte, wobei durchaus schon wieder die Möglichkeit bestand, daß diese neuen Werte gar nicht mehr aktuell waren, da sich bereits erneut eine Schlupfänderung an dem die einstellbaren Dosierorgane oder den regelbaren Antrieb antreibenden Rad vorlag.

Infolge der erfindungsgemäßen Maßnahme wird durch die Anordnung einer Wegstreckenmeßeinrichtung an dem Rad, welches die einstellbaren Dosierorgane oder den regelbaren Antrieb antreibt, sowie des Vergleiches dieser Wegstreckenmessung mit der unabhängig von diesem Rad arbeitenden weiteren Wegstreckenmeßeinrichtung bei der Differenzänderung der beiden Wegstreckenmeßwerte der regelbare Antrieb nachgeregelt, so daß bei der Einstellung der Dosierorgane oder des regelbaren Antriebes der an dem die Dosierorgane oder den regelbaren Antrieb antreibenden Rad auftretende Schlupf, der unerwünschte Änderungen der Ausgangsdrehzahl des regelbaren Antriebes oder Drehzahl der Dosierorgane hervorruft, ausgeschaltet wird. Dies bedeutet also, daß aufgrund der Ermittlung des Schlupfes an dem Rad, welches die Dosierorgane oder den regelbaren Antrieb antreibt, und der Erfassung der Schlupfänderung, d.h. der Differenzänderung zwischen den beiden erfaßten Wegstreckenwerte, die Einstellung der Dosierorgane oder der regelbare Antrieb entsprechend der Schlupfänderung sofort nachgeregelt wird. Dieses ist besonders wichtig, weil sich der Schlupf sehr häufig und sehr schnell ändern kann.

In bevorzugter Weise ist erfindungsgemäß vorgesehen, daß die Regelung des regelbaren Antriebes über den Regelkreis mit der Wegstreckenmeßeinrichtung anhand vorgegebener Tabellenwerte erfolgt, und daß nach Einregeln des regelbaren Antriebes anhand der Tabellenwerte unter Berücksichtigung der Differenzänderung der Wegstreckenwerte der Regelkreis mit der Ausbringmengenerfassung wieder zugeschaltet wird. Aufgrund dieser Maßnahme ist also ein zweiter Regelkreis, der die Einstellung der Dosierorgane oder den regelbaren Antrieb alleine aufgrund der Schlupfänderungen an dem den regelbaren Antrieb antreibenden Rad regelt, dem Regelkreis, der den regelbaren Antrieb aufgrund der tatsächlich ausgebrachten Menge bzw. Anzahl der Körner des auszubringenden Saatgutes oder Düngers regelt, nebengeordnet. Hierbei ist jedoch der Schlupfregelkreis derart der gesamten Regelung zugeordnet, daß bei einer Schlupfänderung aufgrund der Schlupfänderung die Einstellung der Dosierorgane oder der regelbare Antrieb sofort entsprechend der Schlupfänderung nachgeregelt wird. Die Regelung aufgrund der Differenzänderung der Wegstreckenwerte ist also der Ausbringmengenregelung übergeordnet.

Des weiteren ist erfindungsgemäß vorgesehen, Erkennen von Schlupf an dem die Dosierorgane oder den regelbaren Antrieb antreibenden Rad aufgrund der Differenzänderung der Wegstreckenmeßwerte von dem Rad und der praktisch schlupffreien Wegstreckenmeßeinrichtung der regelbare Antrieb entsprechend der Schlupfänderung bzw. der Differenzänderung nachgeregelt wird. Infolge dieser Maßnahmen wird bei Schlupfänderung aufgrund dieses Regelkreises die Regelung aufgrund der tatsächlich erfaßten Ausbringmenge oder Anzahl Körner kurzfristig ausgeschaltet und die Einstellung der Dosierorgane oder der regelbare Antrieb nach Tabellenwerten bzw. nach den erfaßten Getriebeinstellungsfunktionswerten in Abhängigkeit der Ausbringmenge oder Anzahl der ausgebrachten Körner derart Antrieb geregelt, so daß die Schlupfänderungen kompensiert werden und nicht auf die Ausbringmenge durchschlagen. Während dieser Zeit kann die ausgeschaltete Regelung aufgrund der tatsächlich erfaßten Ausbringmenge oder Anzahl der ausgebrachten Körner diese Einstellung überprüfen und neue sichere Werte für die Regelung des regelbaren Antriebes ermitteln und die Einstellung der Dosierorgane oder den regelbaren Antrieb aufgrund der Einstellung nach Tabellenwerten aufgrund der Schlupfänderung kontrollieren und evtl. nachregeln. Die Regelung über die Erfassung der tatsächlichen Ausbringmenge oder der Anzahl der tatsächlich ausgebrachten Körner setzt erst dann wieder ein, wenn diese Werte über das Auswertungsverfahren entsprechend abgesichert sind. Hierdurch ergibt sich eine äußerst ruhige und genaue Regelung, so daß der Dünger bzw. das Saatgut äußerst gleichmäßig bzw. in der gewünschten Weise ausgebracht werden kann.

Selbstverständlich läßt sich dieses schlupfabhängige Regelsystem nicht nur auf Verteilmaschinen bei denen die Dosierorgane über einen Regelantrieb in regelbaren Drehzahlen entsprechend der DE-OS 34 14 177 angetrieben werden, sondern selbstverständlich auch bei den sog. Schubraddosiersystemen, die ebenfalls von einem auf dem Boden abrollenden Rad angetrieben werden und bei dem die Ausbringmenge durch die wirksame Breite der Dosierorgane bestimmt wird, anwenden. Bei dem Schubraddosiersystem muß dann die wirksame Breite der Dosierräder bei Schlupfänderungen verändert werden. Die Erfindung soll also sämtliche Verteilmaschine mit sämtlichen Dosiersystemen einschließen, die von einem auf dem Boden abrollenden Rad angetrieben werden, so daß der Schlupf des Antriebsrades bzw. der sich ändernde Schlupf, der an dem Antriebsrad auftritt eliminiert wird, so daß also die Ausbringmenge vom Schlupf unabhängig wird. Selbstverständlich können die Dosierräder auch von einer auf dem abrollenden Walze, wie Packerwalze, Stabwalze, Krümelwalze etc. sowie Stern- oder Spooreräder angetrieben werden.

Weitere Einzelheiten der Erfindung sind der Beispielsbeschreibung und den Zeichnungen zu entnehmen. Hierbei zeigen

Fig. 1 den Aufbau der erfindungsgemäßen schlupfabhängigen Regelung bei einer Sämaschine in Prinzipdarstellung und

Fig. 2 den Aufbau einer weiteren erfindungsgemäßen Regelung bei einer Sämaschine in Prinzipdarstellung.

Der Vorratsbehälter 1 der als Sämaschine ausgebildeten Verteilmaschine weist in seinem unteren Bereich Auslauföffnungen auf, vor denen die Dosierorgane 2 angeordnet sind. Die Dosierorgane 2 sind auf der Dosierwelle drehfest angeordnet und werden über den als das stufenlos einstellbare Regelgetriebe 4 ausgebildeten regelbaren Antrieb über die Kettentriebe 5 von dem auf dem Boden 6 abrollendem Laufrad 7 angetrieben. Die Dosierorgane 3 führen den Säscharen 8 das Saatgut zu in einstellbaren Mengen. In dem Bereich des Laufrades 7 ist der Wegaufnehmer 9 angeordnet, der den tatsächlich zurückgelegten und mit Schlupf behafteten Weg des Laufrades 7 auf dem Boden ermittelt. Die von dem Wegaufnehmer 9 aufgenommenen Signale oder Meßwerte werden dem Mikroprozessorsystem 10 zugeleitet. Des weiteren weist die Drillmaschine die Wegstreckenmeßeinrichtung 11 auf, die beispielsweise als auf der Bodenoberfläche 6 abrollendes Scheibensech, als Ultraschall- oder Radarwegstreckenmeßgerät ausgebildet ist. Diese Wegstreckenmeßeinrichtung 11 ermittelt den tatsächlich von der Drillmaschine ohne Schlupf auf dem Boden zurückgelegten Weg. Die Wegstreckenmeßeinrichtung 11 übermittelt die von ihr gemessenen Meßwerte bzw. Wegstrecken an das Mikroprozessorsystem 10. In dem Mikroprozessorsystem 10 werden die von dem Wegaufnehmer 9, der den von dem Laufrad 7 zurückgelegten Weg ermittelt, ermittelten Wert mit den Meßwerten der Wegstreckenmeßeinrichtung 11 verglichen. Aufgrund der Meßwerte des Wegaufnehmers 9 und der Wegstreckenmeßeinrichtung 11 errechnet das Mikroprozessorsystem 10 den Schlupf, der an dem Laufrad 7, welches die Dosierorgane antreibt, auftritt. Des weiteren ist dem Mikroprozessorsystem 10 die Anzeige- und Bedienungsvorrichtung zugeordnet, über die der auszubringende Sollwert, d.h. die auszubringende Menge bzw. die Anzahl der Körner des auszubringenden Saatgutes pro Flächeneinheit bzw. pro zurückgelegtem Weg, in dem Mikroprozessorsystem eingegeben werden. Entsprechend der eingegebenen Werte steuert das Mikroprozessorsystem 10 über den Einstellmotor 13 das Regelgetriebe 4. In dem Mikroprozessorsystem sind die entsprechenden Ausbringmengen bzw. die entsprechende Anzahl von Körnern für jede Getriebeeinstellung des Regelgetriebes 4 eingespeichert. Der Einstellmotor 13 steuert über die Steuerkette 14 und den Einstellhebel 15 des regelgetriebes 4 die Einstellung des Regelgetriebes.

Zu Beginn des Ausbringvorganges legt der Landwirt fest, welche Ausbringmenge bzw. Anzahl von Körnern pro Flächeneinheit bzw. Wegstrecke ausgebracht werden sollen. Evtl führt er eine Abdrehprobe durch, umd die Einstellung zu kontrollieren. Entsprechend dieser Vorgabe wird das Regelgetriebe 4 eingestellt. Bei diesem vorgegebenen Einstellwert wird davon ausgegangen, daß an dem Laufrad 7, welches das als regelbaren Antrieb ausgebildete Regelgetriebe 4 antreibt kein Schlupf oder aber ein Schlupf in konstanter Größe auftritt, der dann bei der Einstellung berücksichtigt wird, ausgegangen. Abweichungen vom vorgegebenen Schlupf an dem Laufrad 7 werden durch die Regelung ausgeglichen.

Während des Ausbringvorganges ändert sich jedoch der an dem Laufrad 7 beim Abrollen auf der Bodenoberfläche auftretende Schlupf sehr schnell und sehr häufig. Dieser sich ändernde Schlupf wird durch den Vergleich der von dem dem Laufrad 7 zugeordneten Wegaufnehmer 9 und der von der weiteren Wegstreckenmeßeinrichtung 11, die unabhängig von dem Wegaufnehmer 9 und dem Laufrad 7 arbeitet, ermittelten Wert ständig in Mikroprozessorsystem miteinander verglichen. Sobald eine Differenzänderung der Wegstreckenwerte von dem Wegaufnehmer 9 und der Wegstreckenmeßeinrichtung 11 von dem Mikroprozessorsystem festgestellt wird, wird von dem Mikroprozessorsystem 10 aus der Einstellmotor 13 eingeschaltet und über die Steuerkette 14 und dem Einstellhebel 15 die Einstellung des Regelgetriebes 4 entsprechend der Schlupfänderung verstellt, so daß trotz des sich ändernden Schlupfes die Ausbringmenge bzw. die Anzahl der ausgebrachten Körner des Saatgutes pro Flächeneinheit bzw. pro zurückgelegter Wegstrecke konstant bleibt. Der Schlupf wird also eliminiert und wirkt sich nicht als eine Änderung der Ausbringmenge bzw. der Anzahl der ausgebrachten Körner pro Wegstrecke oder Flächeneinheit aus. Das Mikroprozessorsystem 10 vergleicht ständig die vom dem Wegaufnehmer 9 und der Wegstreckenmeßeinrichtung 11 übermittelten Werte und regelt bzw. steuert sofort bei einer Änderung der Differenz der von dem Wegaufnehmer 9 und der Wegstreckenmeßeinrichtung 11 übermittelten Werte die Einstellung des Regelgetriebes, d.h. bei einer Schlupfänderung an dem Laufrad 7 wird über den Einstellmotor 13 das Regelgetriebe 4 nachgeregelt, so daß die Einstellung der Ausbringmenge pro Wegstrecke bzw. Flächeneinheit gleichbleibt.

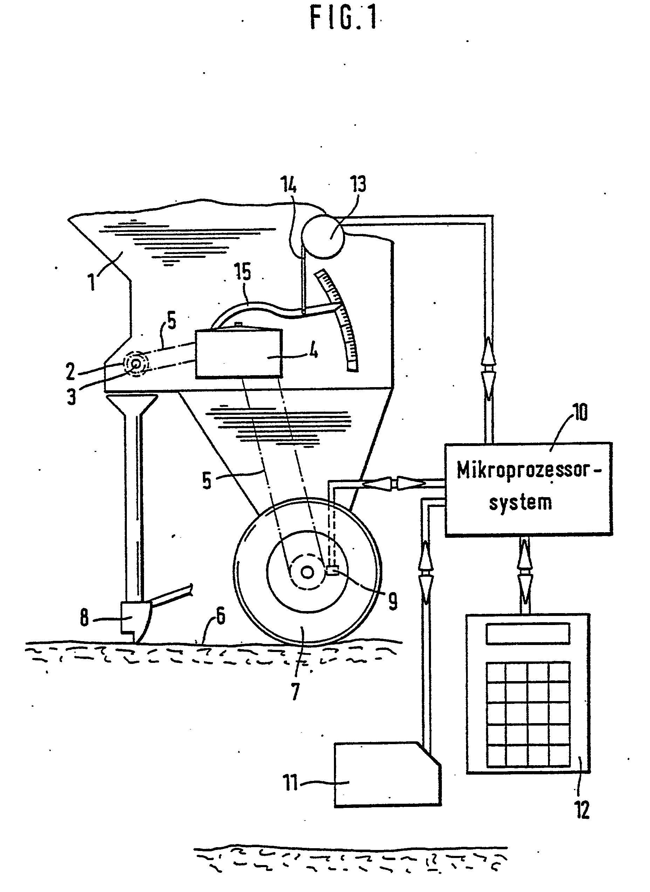

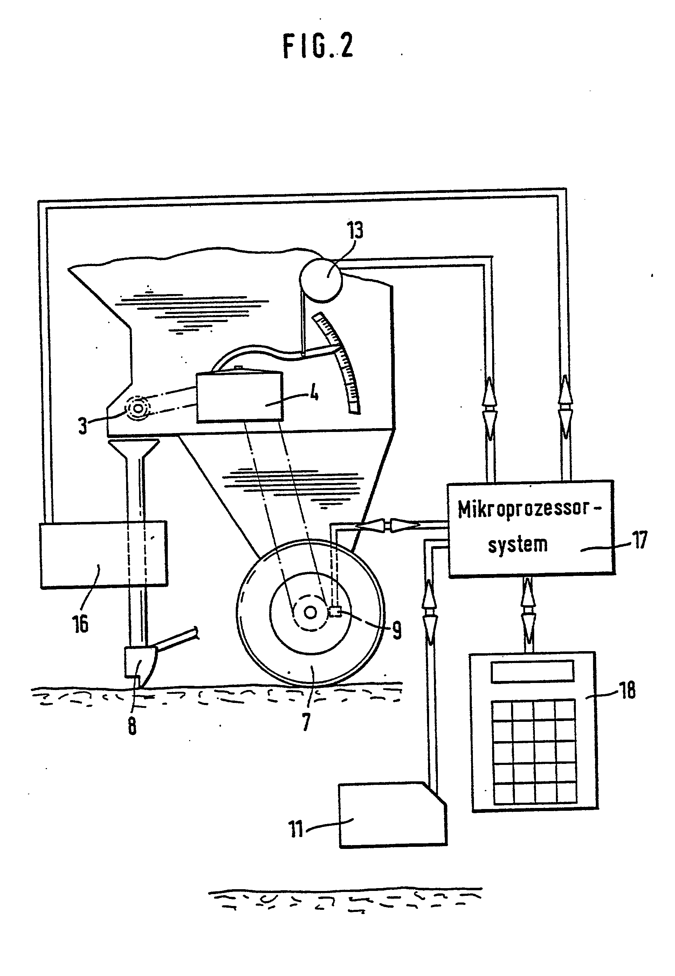

Die in Fig. 2 dargestellte Drillmaschine unterscheidet sich von der in Fig. 1 dargestellten Sämaschine dadurch, daß zwischen dem Dosierorgan 2 und dem Säschar 8 ein Körnerzählsensor 16 angeordnet ist. Dieser Körnerzählsensor 16 zählt die von den Dosierorganen 3 ausgebrachte Anzahl von Körnern bzw. ermittelt die Ausbringmenge und übermittelt die gemessenen Werte dem Mikroprozessorsystem 17. Diesem Mikroprozessorsystem 17 werden, wie bereits bei dem Ausführungsbeispiel gemäß Fig. 1 erläutert, von dem Wegaufnehmer 9 und der Wegstreckenmeßeinrichtung 11, die als Scheibensech oder Radarmeßgerät ausgebildet sein können, jeweils die entsprechende Meßwerte übermittelt. Über die Anzeige- und Bedienungsvorrichtung 18 werden die Sollausbringmenge pro Flächeneinheit bzw. zurückgelegtem Weg in das Mikroprozessorsystem eingegeben. Über das Mikroprozessorsystem 17 wird aufgrund der vom Körnerzählsensor 16 ermittelten Werte unter Berücksichtigung der Meßwerte der Wegstreckenmeßeinrichtung 11 der als Regelgetriebe 4 ausgebildete regelbare Antrieb über den Einstellmotor 13 gesteuert, der entsprechende Steuerimpulse von dem Mikroprozessor 17 erhält. Des weiteren vergleicht das Mikroprozessorsystem 17 die von dem Wegaufnehmer 9 und der Wegstreckenmeßeinrichtung 11 übermittelten Wert miteinander und errechnet aus diesen Werten den an dem laufrad 7, welches den regelbaren Antrieb 4 antreibt, von dem aus die Dosierorgane 3 angetrieben werden, auftretenden Schlupf. Sobald eine Differenzänderung zwischen den Werten des Wegaufnehmers 9 und der Wegstreckenmeßeinrichtung 11 von dem Mikroprozessorsystem 16 festgestellt wird, d.h. wenn eine Schlupfänderung an dem Laufrad 7 auftritt, wird über den Stellmotor 13 das Regelgetriebe 4 nachgeregelt, wobei dann gleichzeitig der Regelkreis mit der Ausbringmengenerfassung des Körnerzählsensors 16 zeitweilig ausgeschaltet wird. Die Regelung des Regelgetriebes 4 erfolgt bei einer Schlupfänderung am Laufrad 7 anhand vorgegebener Tabellenwerte, die in das Mikroprozessorsystem 17 eingespeichert sind. Diese Tabellenwerte bzw. die Funktion der Getriebeänderung bei Veränderung der Getriebeeinstellung und der daraus resultierenden Ausbringmenge bzw. Anzahl von Körnern sind in das Mikroprozessorsystem 17 eingespeichert und aufgrund dieser Funktionen wird der regelbare Antrieb 4 vom Mikroprozessor 17 unter Ausschaltung des Regelkreises mit der Ausbringmengenerfassung über den Körnerzählsensor 16 ausgeschaltet. Nach dem Einregeln des regelbaren Antriebes 4 anhand dieser vorgegebenen Werte aufgrund der Schlupfänderung, die durch den Vergleich der Meßwerte der Wegaufnehmer 9 und der Wegstreckenmeßeinrichtung 11 festgestellt worden ist, wird der Regelkreis mit der Ausbringmengenerfassung wieder zugeschaltet und das Regelgetriebe 4 wird dann aufgrund der von dem Körnerzählsensor erfaßten Werte in Verbindung mit dem von der Wegstreckenmeßeinrichtung erfaßten Wegstrecke wieder geregelt. Die Regelung aufgrund der Schlupfänderung d.h. aufgrund der Differenzänderung der Wegstreckenwerte ist der Ausbringmengenregelung über den Körnerzählsensor 16 übergeordnet. Durch das Erkennen von Schlupf an dem den regelbaren Antrieb antreibenden Rad 7 aufgrund der Differenzänderung der Wegstreckenmeßwerte von dem Rad 7 und der praktisch schlupffreien Wegstreckenmeßeinrichtung 11 wird der regelbare Antrieb 4 entsprechend der Schlupfänderung an dem Laufrad 7 sofort unabhängig von der Ausbringmengenregelung über den Körnerzählsensor 16 nachgeregelt.

**Patentansprüche**

1. Landwirtschaftliche Verteilmaschine, insbesondere Sämaschine oder Düngerstreuer mit regelbaren Dosierorganen, die von zumindest einem auf dem Boden abrollenden Rad oder einer Walze etc. angetrieben werden, wobei an der Maschine eine Wegstreckenmeßeinrichtung zur Feststellung der tatsächlich zurückgelegten Wegstrecke angeordnet ist und die Dosierorgane in Abhängigkeit der durch die Wegstreckenmeßeinrichtung ermittelten momentanen Geschwindigkeit bzw. Wegstrecke pro Zeit derart regelbar sind, daß die gewünschte Ausbringmenge oder die Anzahl der Körner des auszubringenden Saatgutes oder Düngers in Abhängigkeit von der zurückgelegten Wegstrecke ausbringbar ist, dadurch gekennzeichnet, daß an dem die Dosierorgane antreibenden Rad ein Wegaufnehmer (9) angeordnet ist, und daß die von dem Rad (7) und der Wegstreckenmeßeinrichtung (11) jeweils parallel bzw. während des gleichen Zeitpunktes aufgenommenen Werte ständig miteinander verglichen werden, und daß bei Änderung der Differenz dieser beiden Werte die regelbaren Dosierorgane entsprechend der Differenzänderung verstellt werden.

2. Landwirtschaftliche Verteilmaschine, insbesondere Sämaschine oder Düngerstreuer mit regelbaren Dosierorganen, die von zumindest einem auf dem Boden abrollenden Rad oder Walze etc. angetrieben werden, wobei an der Maschine eine Wegstreckenmeßeinrichtung zur Feststellung der tatsächlich zurückgelegten Wegstrecke angeordnet ist und die Dosierorgane in Abhängigkeit der durch die Wegstreckenmeßeinrichtung ermittelten momentanen Geschwindigkeit bzw. Wegstrecke pro Zeit derart regelbar sind, wobei ferner die gewünschte Ausbringmenge oder die Anzahl der Körner des auszubringenden Saatgutes oder Düngers in Abhängigkeit von der Wegstrecke ausbringbar ist und eine Einrichtung zur Erfassung eines der tatsächlichen Ausbringmenge entsprechenden Wertes vorgesehen ist, die mit der Wegstreckenmeßeinrichtung verknüpft ist, und aufgrund der Werte der Wegstreckenmeßeinrichtung und der Ausbringmengenwerte der regelbare Antrieb geregelt wird, dadurch gekennzeichnet, daß an dem die Dosierorgane antreibenden Rad (7) ein Wegaufnehmer (9) angeordnet ist, und daß die von dem Rad (7) und der Wegstreckenmeßeinrichtung (11) jeweils parallel bzw. während des gleichen Zeitpunktes aufgenommenen Werte ständig miteinander verglichen werden, und daß bei Änderung der Differenz dieser beiden Werte die regelbaren Dosierorgane entsprechend der Differenzänderung verstellt werden, und daß bei Feststellung der Differenzänderung der beiden Wegstreckenwerte der Regelkreis mit dem Ausbringmengenwert von dem Regelkreis mit der Differenzänderung der Wegstreckenwerte übersteuert wird.

3. Verteilmaschine nach Anspruch 2, dadurch gekennzeichnet, daß bei Feststellung der Differenzänderung der Wegstreckenwerte der den regelbaren Antrieb (4) oder die Dosierorgane steuernde Regelkreis mit der Ausbringmengenerfassung zeitweilig ausgeschaltet wird, und daß die Regelung des regelbaren Antriebes (4) oder die Einstellung der Dosierorgane über den Regelkreis mit der Wegstreckenmeßeinrichtung (11) anhand vorgegebener Tabellenwerte erfolgt, und daß nach Einregeln des regelbaren Antriebes (4) oder der Dosierorgane anhand der Tabellenwerte unter Berücksichtigung der Differenzänderung der Wegstreckenwerte der Regelkreis mit der Ausbringmengenerfassung wieder zugeschaltet wird.

4. Verteilmaschine nach Anspruch 2, dadurch gekennzeichnet, daß der Ausbringmengenregelung die Regelung aufgrund der Differenzänderung der Wegstreckenwerte übergeordnet ist.

5. Verteilmaschine nach Anspruch 1 oder 2, dadurch gekennzeichnet, daß bei Erkennen von Schlupf an dem den regelbaren Antrieb (4) oder die einstellbaren Dosierorgane antreibenden Rad (7) aufgrund der Differenzänderung der Wegstreckenmeßwerte von dem Rad (4) und der praktisch schlupffreien Wegstreckenmeßeinrichtung (11) der regelbare Antrieb (4) oder die Einstellung der Dosierorgane entsprechend der Schlupfänderung bzw. der Differenzänderung nachgeregelt wird.

## Claims

1. Agricultural distributor, more especially a sowing machine or fertilizer broadcaster, including adjustable metering members which are driven by at least one wheel, which travels along the ground, or one roller etc., wherein a distance measuring arrangement for determining the distance actually covered is disposed on the distributor, and the metering members are adjustable, in dependence on the instantaneous speed or distance per period of time, which is determined by the distance measuring arrangement, in such a manner that the desired amount for distribution or the number of grains of the seed material or fertilizer to be distributed can be distributed in dependence on the distance covered, characterised in that a displacement transducer (9) is disposed on the wheel which drives the metering members, and in that the values, which are picked-up by the wheel (7) and the distance measuring arrangement (11) either in parallel or during the same period of time, are constantly compared with each other, and in that, if the difference between these two values changes, the adjustable metering members are adjusted in accordance with the change in the difference.

2. Agricultural distributor, more especially a sowing machine or fertilizer broadcaster, including adjustable metering members which are driven by at least one wheel or roller etc., which travels along the ground, wherein a distance measuring arrangement for determining the distance actually covered is disposed on the distributor, and the metering members are adjustable, in dependence on the instantaneous speed or distance per period of time which is determined by the distance measuring arrangement, wherein also the desired amount for distribution or the number of grains of the seed material or fertilizer to be distributed can be distributed in dependence on the distance, and an arrangement for determining a value corresponding to the actual amount for distribution is provided and is connected to the distance measuring arrangement, and the adjustable drive is adjusted on the basis of the values of the distance measuring arrangement and the values of the amount for distribution, characterised in that a displacement transducer (9) is disposed on the wheel (7) which drives the metering members, and in that the values, which are picked-up by the wheel (7) and the distance measuring arrangement (11) either in parallel or during the same period of time, are constantly compared with each other, and in that, if the difference between these two values changes, the adjustable metering members are adjusted in accordance with the change in the difference, and in that, if the change in the difference between the two distance values is determined, the control system provided with the value of the amount for distribution is overridden by the control system provided with the change in the difference between the distance values.

3. Distributor according to claim 2, characterised in that, if the change in the difference between the distance values is detected, the control system controlling the adjustable drive (4) or the metering members and provided with determination of the amount for distribution is temporarily switched-off, and in that the adjustment of the adjustable drive (4) or the setting of the metering members is effected via the control system together with the distance measuring arrangement (11) with reference to prescribed tabulated values, and in that, after the adjustable drive (4) or the metering members have been adjusted, with reference to the tabulated values and with regard to the change in the difference between the distance values, the control system with determination of the amount for distribution is switched on again.

4. Distributor according to claim 2, characterised in that the adjustment, based on the change in the difference between the distance values, is superimposed on the adjustment of the amount for distribution.

5. Distributor according to claim 1 or 2, characterised in that, if slip is detected at the wheel (7) which drives the adjustable drive (4) or the adjustable metering members, the adjustable drive (4) or the setting of the metering members corresponding to the change in slip or the change in the difference is readjusted on the basis of the change in the difference between the distance measuring values taken from the wheel (7) and the virtually slip-free distance measuring arrangement (11).

## Revendications

1. Distributeur agricole notamment semoir ou distributeur d'engrais comportant des organes de dosage réglables entraînés par au moins une roue ou un rouleau roulant sur le sol, la machine comportant une installation de mesure de distance parcourue pour déterminer la distance réellement parcourue et les organes de dosage étant réglables en fonction de la vitesse instantanée ou de la distance parcourue par rapport au temps, grandeur déterminée par l'installation de mesure de distance parcourue, et la quantité ou le nombre des grains de semence ou d'engrais, à distribuer étant fournis en fonction de la distance parcourue, distributeur caractérisé en ce que la roue qui entraîne les organes de dosage comporte un capteur de distance parcourue (9) et la grandeur obtenue à partir de la roue (7) et celle fournie par l'installation de mesure de distance parcourue (11) étant comparées en permanence, soit en parallèle, soit pour des grandeurs prises aux mêmes instants et en cas de variation de la différence de ces deux grandeurs, la machine règle les organes de dosage réglables en fonction de cette variation de la différence.

2. Distributeur agricole notamment semoir ou distributeur d'engrais comportant des organes de dosage réglables entraînés par au moins une roue ou un rouleau, roulant sur le sol, la machine comportant une installation de mesure de distance parcourue pour déterminer la distance réellement parcourue, les organes de dosage étant réglables dans le temps, en fonction de la vitesse instantanée ou de la distance parcourue, déterminée par l'installation de mesure de distance parcourue, et la quantité que l'on souhaite distribuer ou le nombre des grains de semence ou d'engrais à distribuer étant susceptible d'être fourni en fonction de la distance parcourue, cette machine comportant une installation pour saisir une grandeur correspondant à la quantité réellement distribuée, qui est combinée à l'installation de mesure de distance parcourue et partant de ces grandeurs correspondant à l'installation de mesure de distance parcourue et à la quantité à distribuer, on règle le moyen d'entraînement réglable, caractérisé en ce que la roue (7) qui entraîne les organes de dosage est muni d'un capteur de course (9) et en ce que les grandeurs saisies au même instant par la roue (7) et l'installation de mesure de distance parcourue (11), en parallèle ou au même instant, sont comparées en permanence l'une à l'autre et en cas de variation de la différence de ces deux grandeurs, les organes de dosage réglables sont réglés en fonction de cette variation de différence et en ce que lorsque le circuit de réglage constate une variation de la différence des deux grandeurs de trajectoire parcourue, il commande la quantité distribuée par le circuit de réglage avec la variation de différence des distances parcourues.

3. Distributeur selon la revendication 2, caractérisé en ce qu'est constaté une variation de différence des distances parcourues, le circuit de réglage qui commande le moyen d'entraînement réglable (4) ou les organes de dosage, est mis hors service provisoirement pour la saisie de la quantité à distribuer et en ce que le réglage de l'entraînement réglable (4) ou le réglage des organes de dosage se fait par le circuit de réglage avec l'installation de mesure de distance parcourue (11) à l'aide de tableaux de grandeurs, prédéterminés, et en ce qu'après avoir réglé l'entraînement réglable (4) ou les organes de dosage suivant les grandeurs des tableaux en tenant compte de la variation de différence des distances parcourues, on branche de nouveau le circuit de réglage avec la saisie de la quantité distribuée.

4. Distributeur selon la revendication 2, caractérisé en ce que le réglage en fonction de la variation de la différence des distances parcourues est prioritaire au réglage de la quantité distribuée.

5. Distributeur selon la revendication 1 ou 2, caractérisé en ce qu'en cas de détection de glissement de la roue (7) qui est entraînée par le moyen d'entraînement réglable (4) ou qui entraîne des organes de dosage réglables, par suite de la variation de différence des grandeurs des distances parcourues par la roue (4) et l'installation de mesure distance parcourue (11) qui mesure pratiquement sans glissement, on asservit l'entraînement réglable (4) ou on règle les organes de dosage en fonction de la variation de glissement ou de la variation de différence.

# FIG.1

Mikroprozessor-system

# FIG.2

Mikroprozessor-system